# EUROPEAN PATENT APPLICATION

(11) **EP 2 993 363 A1**
(43) Date of publication of application: **09.03.2016**
(21) Application number: 14183275.8
(22) Date of filing: 02.09.2014
(51) Int. Cl.: F16B 39/10, F16B 39/02

(54) **Method and device for locking screws**

(71) Applicant: Caterpillar Energy Solutions GmbH, 68167 Mannheim (DE)
(72) Inventor: Guisasola, Íñigo, 76829 Landau in der Pfalz (DE)
(74) Representative: Kramer Barske Schmidtchen Patentanwälte PartG mbB

(57) **Abstract**

The present disclosure generally relates to a method and device for locking at least two mounting screws (34) against rotation. The at least two mounting screws (34) may be configured to connect a first member (30) to a second member (20), wherein each of the at least two mounting screws (34) may have a screw head (36). The disclosed method may comprise engaging an anti-rotation member (42; 142) with an associated screw head (36) of the at least two mounting screws (34), and connecting the anti-rotation members (42; 142) with each other for rotationally locking each of the at least two mounting screws (34) by slipping each of the anti-rotation members (42; 142) over an associated leg (48) provided at a connecting member (44) for aligning and positioning the anti-rotation members (42; 142) to one another.

## Description

### Technical Field

The present disclosure generally relates to a method and device for locking a plurality screws and, particularly, to a method and device for mechanically locking screws against rotation.

### Background

For locking screws, it is known to apply, for example, a screw glue onto the screw threads and then the screw may be screwed into a tapped hole. The applied screw glue may then cure and a rotationally locked screw connection may be achieved. When disassembling such screw connection, the cured screw glue may be destroyed such that the screw may not be re-used again.

WO 2012/131215 A1 discloses an engine flywheel equipped with means for retaining bolts that attach the flywheel to a crankshaft. An inertia wheel is intended to be fixed to the end of the crankshaft by bolts fitted into orifices of the inertia wheel. The means for retaining the bolts comprise deformable means extending radially in the orifices for the passage of the bolts and pressing against the bolts in order to keep them in axial position.

The present disclosure is directed, at least in part, to improving or overcoming one or more aspects of prior systems.

### Summary of the Disclosure

According to an aspect of the present disclosure, a method for locking at least two mounting screws against rotation is disclosed. The at least two mounting screws may be configured to connect a first member to a second member, wherein each of the at least two mounting screws may heve a screw head. The disclosed method may comprise engaging an anti-rotation member with an associated screw head of the at least two mounting screws, and connecting the anti-rotation members with each other for locking each of the at least two mounting screws against rotation. The anti-rotation members may be connected to one another by slipping each of the anti-rotation members over an associated leg provided at a connecting member for aligning and positioning the anti-rotation members to one another.

According to another aspect of the present disclosure, an anti-rotation device for locking at least two mounting screws against rotation is disclosed. The disclosed at least two mounting screws may be configured to connect a first member to a second member, wherein each of the at least two mounting screws may have a screw head. The disclosed anti-rotation device may comprise at least two anti-rotation members each configured to engage an associated screw head of the at least two mounting screws, and a connecting member connecting the at least two anti-rotation members to one another, such that the at least two anti-rotation members are aligned to one another. The connecting member may include a base portion and at least two legs radially extending from the base portion. The at least two anti-rotation members may be configured to be mounted to an associated leg.

In some embodiments, the step of aligning and positioning each of the anti-rotation members to one another may include providing a through hole in each of the anti-rotation members. The through hole of the associated anti-rotation member may be configured to be aligned relative to the associated anti-rotation member and to match with an associated leg of the connecting member. The through holes within the anti-rotation members may have a specific orientation with respect to the anti-rotation members engaging an associated screw head.

Other features and aspects of this disclosure will be apparent from the following description and the accompanying drawings.

### Brief Description of the Drawings

Fig. 1 illustrates a sectional view of a torsional damping device attached to a crankshaft of an internal combustion engine via a flange element using mounting screws locked against rotation by an exemplary disclosed anti-rotation device;
Fig. 2 illustrates an enlarged view of the exemplary disclosed anti-rotation device of a portion II of Fig. 1;
Fig. 3 illustrates a top view of an exemplary disclosed connecting member of the anti-rotation device of Fig. 2;
Fig. 4 illustrates a top view of a positioning die for aligning an anti-rotation member relative to an associated screw head;
Fig. 5 is a sectional view of the positioning die of Fig. 4 taken along line V - V of Fig. 4;
Fig. 6 illustrates a top view of an aligning device configured to be positioned at the positioning die of Fig. 4 and to receive an associated anti-rotation member;
Fig. 7 illustrates a sectional view of the aligning device of Fig. 6 taken along line VII - VII of Fig. 6;
Fig. 8 illustrates a sectional view of the positioning die of Fig. 4 and the aligning device of Fig. 6 mounted to an associated screw head with an anti-rotation member engaged with a screw head; and
Fig. 9 illustrates a sectional view of a further embodiment of the positioning die.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based at least in part on the realization that at least two mounting screws may be locked against rotation by engaging each of the screw heads of the at least two mounting screws with an associated anti-rotation member and connecting the anti-rotation members with each other. This may mechanically lock each of the two mounting screws against rotation.

Particularly, the present disclosure may be based at least in part on the realization that positioning at least two anti-rotation members in associated screw heads of at least two mounting screws and connecting the at least two anti-rotation members with each other may prevent each of the two mounting screws from rotation and, hence, may mechanically lock the mounting screws against rotation. When being engaged with an associated screw head, a bore may be drilled in the anti-rotation members such that the longitudinal axis of the bore is aligned to relatively to the screw head. Then, the anti-rotation members may be attached to a connecting member, in particular by slipping the anti-rotation members over an associated leg provided at the connecting member.

In the following, the method and device for locking at least two mounting screws against rotation of the present disclosure is described with respect to a connection between a torsional damping device 10 and a crankshaft 20 of an internal combustion engine. However, the exemplary disclosed method and device for locking at least two mounting screws against rotation may be applied to any screw connection where at least two screws connect two members with each other.

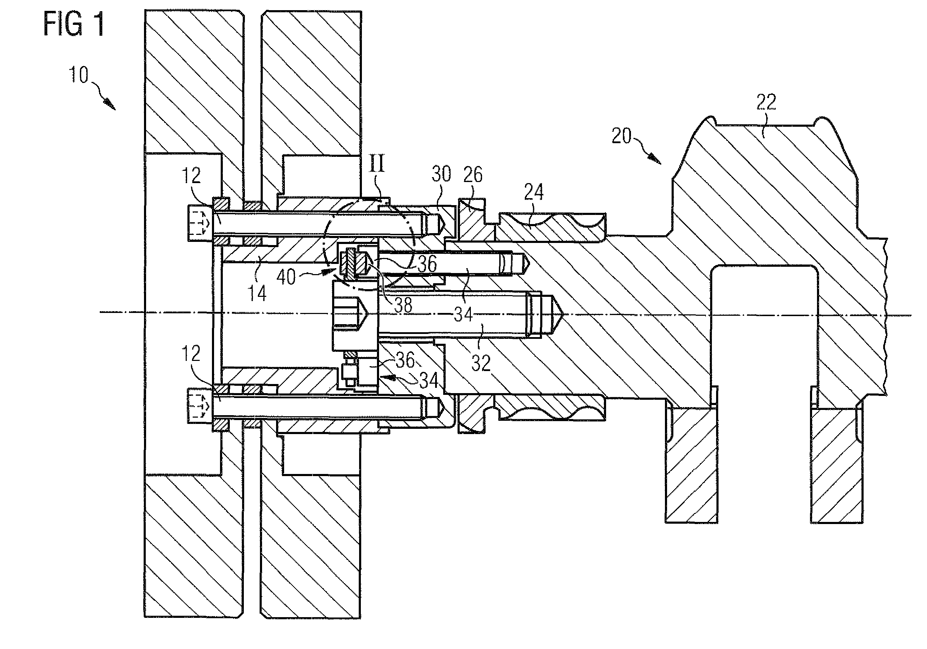

Referring to Fig. 1, a sectional view of the torsional damping device 10 attached to the crankshaft 20 of an internal combustion engine via a flange member 30 is shown. Particularly, as illustrated in Fig. 1, the flange member 30 is attached to the crankshaft 20 via a central attaching screw 32 and a plurality of mounting screws 34. In the exemplary embodiment shown in Fig. 1, there are provided in total nine mounting screws 34, which are symmetrically disposed on a circle extending about the attaching screw 32. Therefore, the sectional view of Fig. 1 only depicts one mounting screw 34 in a cut state, whereas another screw head of a further mounting screw 34 is illustrated, which lies behind the sectional plane of Fig. 1. In some embodiments, there may be provided more or less than nine mounting screws 34.

Each of the mounting screws 34 includes a screw head 36 provided with, in the exemplary embodiment shown in the drawings, an inner hexagonal socket 38. In some embodiments, at least one of the screw heads 36 may have an inner star socket or any other know shape. In some further embodiments, at least one of the screw heads 36 may have an outer hexagonal head, an outer star head, or any other known shape for fastening the mounting screws 34.

As further depicted in Fig. 1, the torsional damping device 10 is mounted to the flange member 30 via a plurality of bolts 12. Specifically, a further mounting member 14 is interposed between the torsional damping device 10 and the flange member 30.

The crankshaft 20 includes a crankshaft journal 22 to which a connecting rod (not shown) connecting to a piston may be mounted. An annular gear member 24 configured to drive a camshaft (not shown) is mounted to the crankshaft 20 via, for example, shrink fit. A further gear member 26 configured to drive, for instance, an oil pump (not shown) is mounted to the crankshaft.

During operation of the internal combustion engine (not shown in the drawings), the crankshaft 20 with the attached torsional damping device 10 may be exerted to vibrations or alternating loads. Such vibrations or alternating loads may cause, for instance, the mounting screws 34 to at least partially unfasten, such that the mounting screws 34 are no more tightened as desired, for instance, tightened with a predetermined and desired torque or force.

In Fig. 1, an anti-rotation device 40 is mounted to the screw heads 36 of the mounting screws 34. The anti-rotation device 40 is configured to mechanically lock the mounting screws 34 against rotation and may prevent unfastening of each of the mounting screws 34.

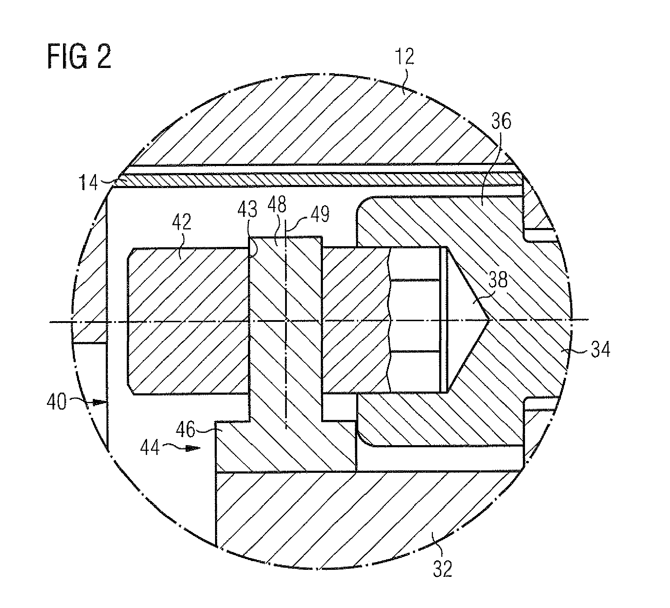

With respect to Fig. 2, an enlarged view of the portion II of Fig. 1 is illustrated. As can be seen in Fig. 2, the anti-rotation device 40 is mounted to the mounting screws 34. The anti-rotation device 40 includes a plurality of anti-rotation members 42 respectively inserted into an inner hexagonal socket 38 of an associated mounting screw 34. The anti-rotation members 42 each have a hexagonal shape (indicated in Fig. 2) substantially corresponding with the inner hexagonal sockets 38 such that, when engaging the inner hexagonal socket 38, the anti-rotation member 42 contacts a circumferential wall of the inner hexagonal socket 38 at at least two sides. In some embodiments, the anti-rotation member may include a cuboid shape contacting at least two opposing surfaces of the circumferential inner wall of the inner hexagonal socket 38. Generally, the anti-rotation members 42 are configured to engage an associated screw head 36 in a torque-proof manner.

The anti-rotation device 40 may be configured to lock mounting screws 34 against rotation which may have a size ranging from, for instance, M4 to M36 and, in some embodiments, up to M52 or greater.

As depicted in Fig. 2, when engaging the inner hexagonal socket 38, the anti-rotation member 42 at least partially protrudes out of the inner hexagonal socket 38. The anti-rotation device 40 further includes a connecting member 44 having a base portion 46 and a plurality of legs 48 radially extending from the base portion 46 along a longitudinal axis 49.

As further shown in Fig. 2, the anti-rotation members 42 includes a through hole 43 through which one of the plurality of legs 48 extends. Thus, each of the anti-rotation members 42 being respectively provided with a through hole 43 is connected to the connecting member 44 by slipping the anti-rotation members 42 over an associated leg 48. Then each of the anti-rotation members 42 is fixed to the associated leg 48 by, for instance, glueing, welding, or any other known fixing means.

In some emodiments, at least one of the anti-rotation members 42 may be loosely received by an associated leg 48. In such case, the anti-rotation members 42 loosely received be an associated leg 48 is axially secured by engaging an associated screw head 36. For example, when loosely mounting at least one anti-rotation member 42 to an associated leg 48, the at least one anti-rotation member 42 may be shiftable along the associated leg 48 and, thus, may be shifted to its desired axial postion at the associated leg 48 for engaging the associated screw head 36.

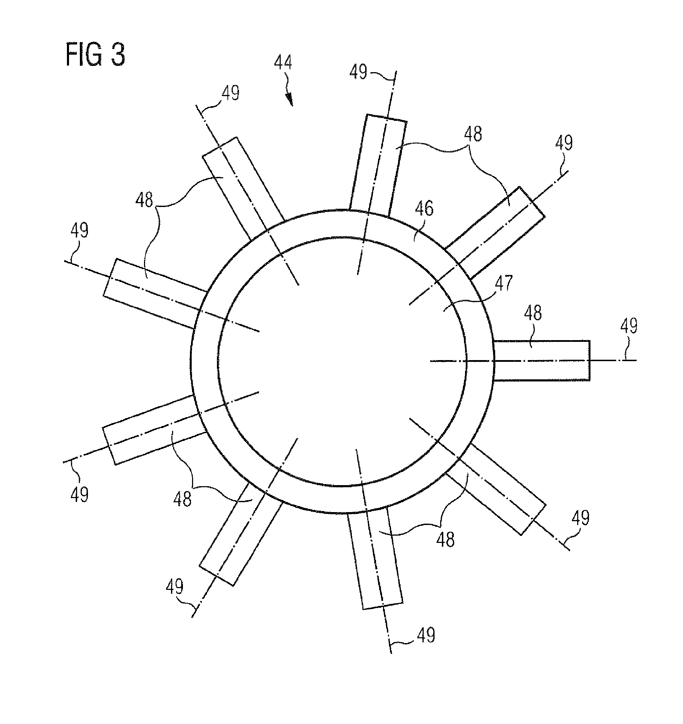

Referring to Fig. 3, a top view of the connecting member 44 is illustrated. As shown in Fig. 3, the base portion 46 is annular with a central opening 47 configured to be slipped over the attaching screw 32 (see Fig. 2). In some embodiments, where no central attaching screw 32 is provided, the base portion 46 may include any other shape configured to receive the legs 48.

As described above, in the exemplary embodiment shown in the drawings, there are in total nine mounting screws 34 to be locked against rotation. The nine mounting screws 34 are symmetrically disposed and equally spaced apart on a circle extending about the attaching screw 32. Hence, in the embodiment shown in the drawings, the connecting member 44 includes in total nine legs 48 radially extending from the base portion 46. Each of the legs 48 is configured to be connected to an associated anti-rotation member 42.

When the mounting screws 34 are respectively tightened such that the flange member 30 is connected to the crankshaft 20, the screw heads 36 are randomly aligned to one another. That is, for example, the inner hexagonal sockets 38 of the mounting screws 34 each have different orientations. Therefore, each of the through holes 43 of the anti-rotation members 42 needs to be aligned relative to the inner hexagonal socket 38, such that, when the anti-rotation members 42 are connected to an associated leg 48, each of the anti-rotation members 42 is still engageable with an associated screw head 36. In other words, each of the through holes 43 needs to be aligned relative to a hexagon of an associated anti-rotation member 42.

### Industrial Applicability

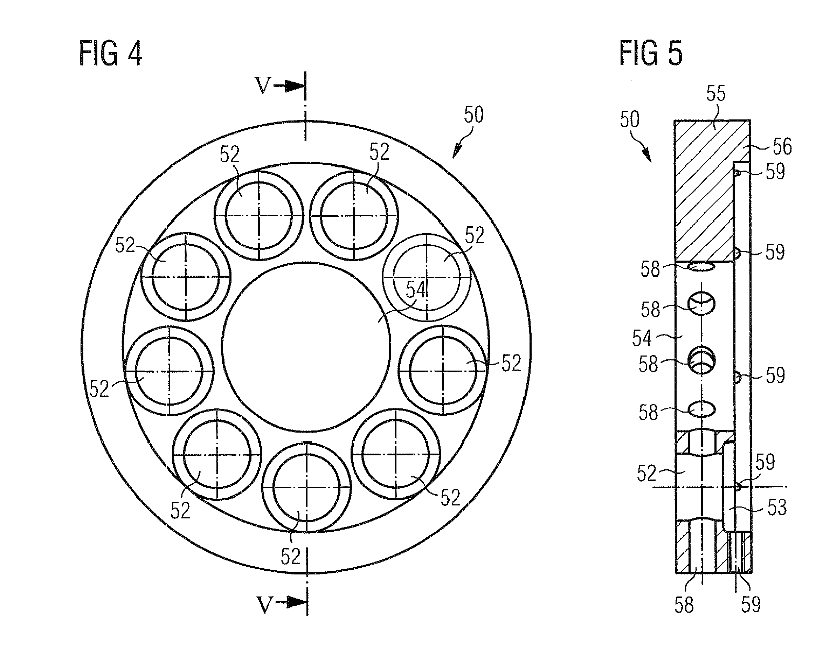

In the following, a method for manufacturing and aligning the through holes 43 relative to the associated anti-rotation member 42 and relative to the associated screw head 36 is described with reference to Figs. 4 to 9.

With respect to Fig. 4, an exemplary embodiment of a positioning die 50 is illustrated. The positioning die 50 is a substantially cylindrical member with a circular cross-section and includes a plurality of through holes 52 each corresponding to a position of an associated screw head 36. In the exemplary embodiment shown in the drawings, the positioning die 50 includes in total nine through holes 52 symmetrically disposed and equally spaced apart on a circle extending about a central opening 54. The central opening 54 is configured to accommodate the screw head of the attaching screw 32 (see Fig. 1).

Referring to Fig. 5, a sectional view of the positioning die 50 of Fig. 4 taken along line V - V is illustrated. As shown in Fig. 5, the positioning die 50 has an annular main body 55 delimiting the central opening 54 and including the plurality of through holes 52. Each of the through holes 52 has a stepped configuration with a stepped portion 53. The stepped portion 53 is provided at an end of the through hole 52 which is opposite to the end of the through hole 52 facing the associated screw head 36. The stepped portions 53 have diameters greater than the diameters of the through holes 52.

The main body 55 further includes a plurality of bores 58 radially extending from the central opening 54. Each of the bores 58 centrally extend through an associated through hole 52, such that the longitudinal axes of the bores 58 respectively intersect with the longitudinal axes of the through holes 52.

The positioning die 50 further includes an annular protrusion 56 protruding from the main body 55. Specifically, the annular protrusion 56 protrudes from the main body 55 in a direction parallel to the longitudinal axis of the central opening 54. The annular protrusion 56 is provided on a side opposite to the screw head 36. Particularly, the annular protrusion 56 and the stepped portions 53 are on the same side of the positioning die 50.

As shown in Fig. 5, the annular protrusion 56 includes a plurality of radially extending tapped holes 59. Specifically, each of the tapped holes 59 has a longitudinal axis parallel to a longitudinal axis of an associated through hole 58. In the exemplary embodiment shown in the drawings, the annular protrusion 56 includes in total nine tapped bores 59 each extending at least partially into an associated stepped portion 53.

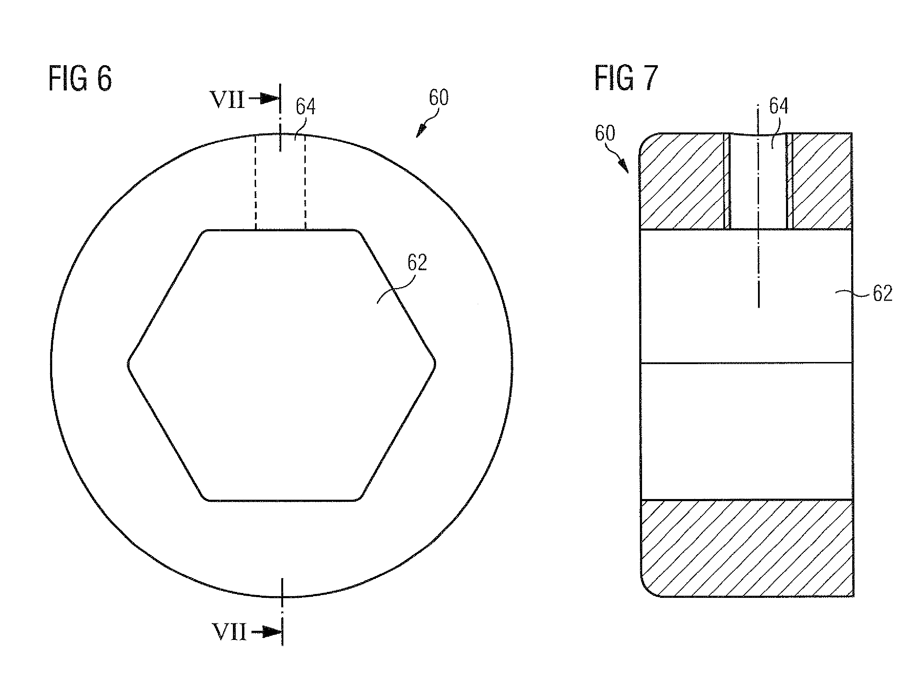

Each of the stepped portions 53 is configured to receive an aligning device 60, which is illustrated in greater detail in Figs. 6 and 7. Fig. 6 shows a top view of an exemplary disclosed alignment device 60 having a substantially annular shape with a circular cross-sectional. The aligning device 60 has an accommodating opening 62 configured to accommodate an associated anti-rotation member 42. As shown, the accommodating opening 62 is shaped such that it matches with the associated anti-rotation member 42. For example, in case of a hexagonal shaped anti-rotation member 42, the accommodating opening 62 also includes a hexagonal shape, such that, when being inserted in the accommodating opening 62, the anti-rotation member 42 is locked against rotation relative to the aligning device 60.

As indicated in dashed lines in Fig. 6, the aligning device 60 includes a radially extending tapped hole 64. With reference to Fig. 7 showing a sectional view of the aligning device 60 taken along line VII - VII of Fig. 6, it can be seen that a longitudinal axis of the tapped hole 64 intersects with the longitudinal axis of the accommodating opening 62.

The outer diameter of the aligning device 60 is substantially equal to the stepped portion 53 of the positioning die 50, such that an aligning device 60 can be positioned within an associated stepped portion 53. When being positioned in the associated stepped portion 53, the aligning device 60 can be freely rotated relative to the main body 55 of the positioning die 50.

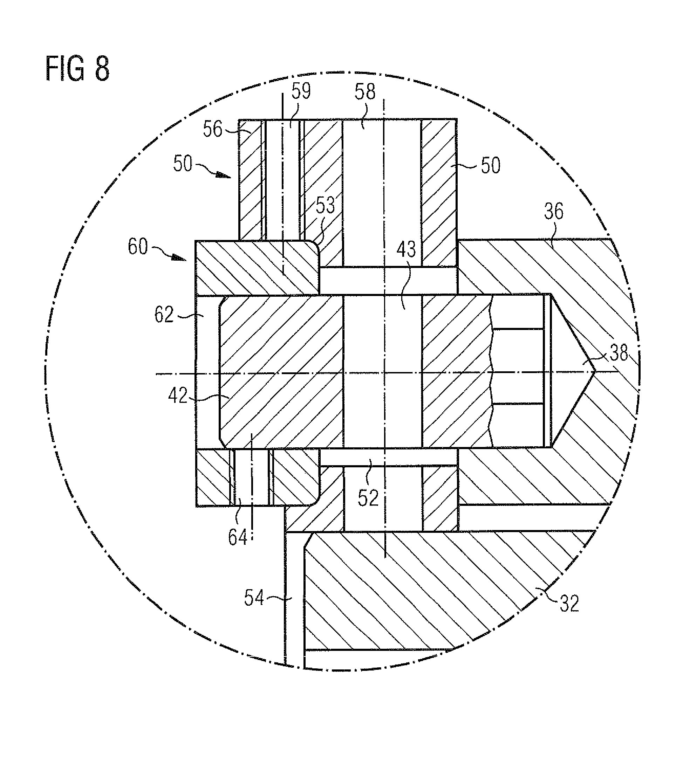

Referring to Fig. 8, first, the positioning die 50 is positioned at the screw heads 36 of the mounting screws 34, such that the central opening 54 extends about the attaching screw 32. Then, the positioning die 50 is rotated such that each longitudinal axis of the through holes 52 is aligned with an longitudinal axis of an associated mounting screw 34. In the embodiment shown in the drawings, after having the positioning die 50 rotated, nine longitudinal axes of the through holes 52 are respectively aligned with a longitudinal axis of an associated one of the nine mounting screws 34.

Subsequently, the anti-rotation members 42 each having a hexagonal shape are positioned within an inner hexagonal socket 38 of an associated screw head 36. In some embodiments, the anti-rotation members 42 are first engaged with the screw heads 36 and, then, the positioning die 50 is positioned over the anti-rotation members 42.

Then, in total nine aligning devices 60 are position in an associated stepped portion 53 and, simultaneously, slipped over an associated anti-rotation member 42, such that each anti-rotation member 42 is inserted into an associated accommodating opening 62. In this state, which is shown in Fig. 8, as each anti-rotation member 42 is inserted into an associated screw head 36, the positioning die 50 is fixed relatively to the mounting screws 34, and the nine aligning devices 60 are each fixed relative to the positioning die 50.

Next, screws are inserted into the tapped holes 59, 64. The tapped holes 59, 64 may be configured to engage with corresponding screws having a size ranging from, for example, M3 to M8. Specifically, the screws engaging the tapped holes 59 are configured to fix the aligning devices 60 relative to the positioning die 50, and the screws engaging the tapped holes 64 are configured to fix the anti-rotation members 42 relative to the associated aligning device 60.

For example, the screws engaging the tapped holes 59 are configured to clamp the associated aligning devices 60 within the stepped portion 53. And the screws engaging the tapped holes 64 are configured to claim the associated anti-rotation member 42 within the accommodating opening 62.

After tightening the screws engaging the tapped holes 59, 64, the positioning die 50 together with the aligning devices 60 and the anti-rotation members 42 can be detached from the mounting screws. Due to the screws tightened in the tapped holes 59, 64, the anti-rotation members 42 maintain their alignments and positions relative to the positioning die 50.

After detaching the positioning die 50 together with the aligning devices 60 and the anti-rotation members 42, the through holes 43 can be drilled into each anti-rotation members 42. Specifically, a driller is inserted into each of the through holes 58, such that the longitudinal axes of the through holes 43 are aligned with the longitudinal axes of the through holes 58, respectively. That is the through holes 58 serve as guides for the driller.

After drilling a through hole 43 into each of the anti-rotation members 42, each longitudinal axis of the through holes 43 is respectively aligned relative to the hexagon of the associated anti-rotation member 42 and, hence, relative to an associated screw head 36. In a final step, each anti-rotation member 42 is connected to the connecting member 44 (see Fig. 3) by inserting the legs 48 into associated through holes 43 and fixing the anti-rotation members 42 to the associated leg 48 by, for instance, glueing or welding. As mentioned above, the anti-rotation members 42 may also be loosely mounted to associated legs 38. In some embodiments, more than one anti-rotation member 42 may be mounted to an associated leg 38.

At the end of the above-described process, the anti-rotation device 40 is finished and can be mounted to the screw heads 36 for locking the mounting screws 34 against rotation. In some embodiments, for ensuring that the anti-rotation device 40 does not fall of the screw heads 36, a support member (not explicitly shown in the drawings) can be sandwiched between the anti-rotation device 40 and the stepped portion 16 of the mounting member 14 (see Fig. 1).

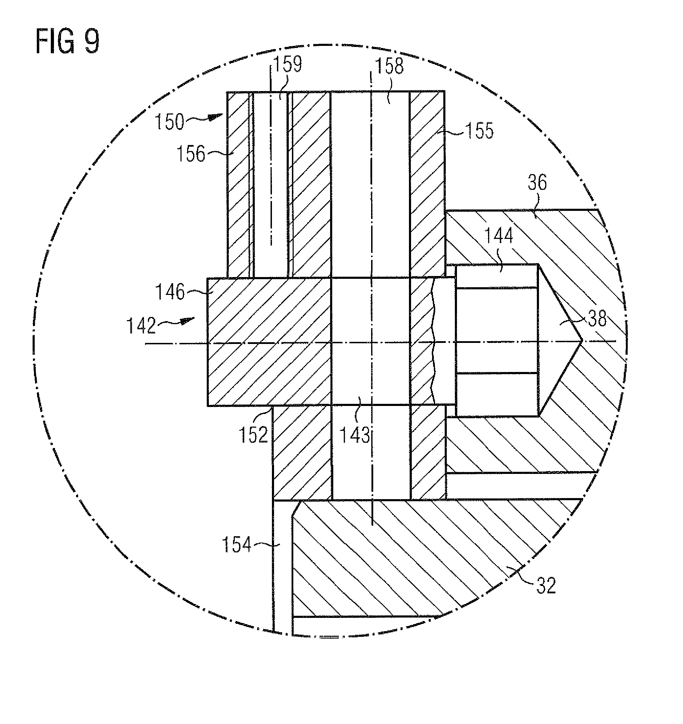

Referring to Fig. 9, a further embodiment of a positioning die 150 is illustrated. The positioning die 150 of the embodiment shown in Fig. 9 differs from the positioning die 50 of the embodiment shown in Figs. 4, 5, and 8 in that there is no stepped portion 53 for receiving an aligning device 60. Instead, the positioning die 150 includes a plurality of circular shaped through holes 152 serving as accommodating openings for accommodating an associated anti-rotation member 142.

As indicated in Fig. 9, each of the anti-rotation members 42 have hexagonal end portions 144 configured to engage an associated screw head 36, and a cylindrical portion 146 with a circular shape. The cylindrical portion 146 is configured to project out of the inner hexagonal socket 38 along a longitudinal axis of the associated mounting screw 34. The diameter of the cylindrical portion 146 is substantially equal to the diameter of the associated through hole 152. As further indicated in Fig. 9, the diameters of the hexagonal end portions 144 are respectively greater than the diameters of the associated cylindrical portions 146.

In the embodiment shown in Fig. 9, the anti-rotation members 142 are first engaged with the screw heads 36, such that the hexagonal end portions 144 are inserted into the associated inner hexagonal sockets 38. Then, the positioning die 150 is positioned at the screw heads 36, such that the each of the through holes 152 accommodate an associated anti-rotation member 142. Next, a screw is inserted into an associated tapped hole 159 and tightened, such that the anti-rotation members 142 are fixed to the positioning die 150. Then, after detaching the positioning die 150 with the anti-rotation members 142 fixed thereto, the through holes 143 are drilled into the anti-rotation members 142, wherein the through holes 158 serve as guides for the driller. In the final step, the anti-rotation members 142 disassembled from the positioning die 150 and are attached to the connecting member 44, especially to the legs 48, as described above.

Therefore, in the embodiment shown in Fig. 9, no aligning devices 60 are necessary for relatively aligning the anti-rotation members 42 having a hexagonal shape to the positioning die 50.

With the exemplary disclosed method and device for locking at least two mounting screws against rotation, it may also be possible to lock two mounting screws 34 having different sizes and/or differently shaped screw heads against rotation. In such embodiments, the anti-rotation members 42, 142 are configured to engage the associated mounting screws 34. Further, the bolts 12 connecting the torsional damping device 10 to the flange member 30 (see Fig. 1) may also be locked against rotation by providing an anti-rotation device 40, 140 according to the present disclosure.

Although the preferred embodiments of this invention have been described herein, improvements and modifications may be incorporated without departing from the scope of the following claims.

## Claims

1. A method for locking at least two mounting screws (34) against rotation, the at least two mounting screws (34) being configured to connect a first member (30) to a second member (20), each of the at least two mounting screws (34) having a screw head (36), the method comprising:
engaging an anti-rotation member (42; 142) with an associated screw head (36) of the at least two mounting screws (34); and
connecting the anti-rotation members (42; 142) to one another for locking each of the at least two mounting screws (34) against rotation, connecting the anti-rotation members (42; 142) includes slipping each of the anti-rotation members (42; 142) over an associated leg (48) provided at a connecting member (44) for aligning and positioning the anti-rotation members (42; 142) to one another.

2. The method of claim 1, wherein aligning and positioning each of the anti-rotation members (42; 142) to one another includes providing a through hole (43; 143) in each of the anti-rotation members (42; 142), the through hole (43; 143) of the associated anti-rotation member (42; 142) being configured to be aligned relative to the associated anti-rotation member (42; 142) and to match with an associated leg (48) of the connecting member (44).

3. The method of claim 2, wherein aligning and positioning the through hole (43; 143) relative to the associated anti-rotation member (42; 142) includes:
engaging the anti-rotation members (42; 142) with each of the screw heads (36) of the at least two mounting screws (34); and
manufacturing the through hole (43; 143) at each of the anti-rotation members (42; 142) while maintaining the anti-rotation members (42; 142) engaged with the screw heads (36).

4. The method of any one of claims 2 or 3, wherein aligning and positioning the through hole (43; 143) relative to the associated anti-rotation member (42; 143) further includes:
providing a positioning die (50; 150) at the at least two mounting screws (34);
fixing the anti-rotation members (42; 142) relatively to the positioning die (50; 150); and
manufacturing the through hole (43; 143) at each of the anti-rotation members (42; 142) while maintaining the anti-rotation members (42; 142) relatively fixed to the positioning die (50; 50).

5. The method of claim 4, wherein aligning and positioning the through holes (43; 143) relative to the associated anti-rotation member (42; 142) further includes providing aligning devices (60) at the positioning die (50), each of the aligning devices (60) being configured to accommodate an associated anti-rotation member (42) and to be fixed to the positioning die (50), thereby fixing the anti-rotation members (42) relative to the positioning die (50).

6. The method of any one of claims 4 or 5, wherein manufacturing the through hole (43; 143) at each of the anti-rotation members (42; 142) includes drilling the through hole (43; 143) with a driller while the positioning die (50; 150) together with the anti-rotation members (42, 142) is detached from the at least two mounting screws (34), the driller being guided by through holes (58; 158) radially provided in the positioning die (50; 150).

7. The method of any one of claims 4 to 6, wherein fixing the anti-rotation members (42; 142) relative to the positioning die (50; 150) includes tightening screws engaging corresponding tapped holes (58, 59; 158) provided in the positioning die (50; 150), the screws being configured to engage the associated anti-rotation member (42; 142).

8. The method of any one of the preceding claims, wherein engaging an anti-rotation member (42; 142) with an associated screw head (36) includes:
inserting at least one of the anti-rotation members (42; 142) in an associated inner hexagonal socket (38) provided at an associated screw head (36); and/or
putting at least one of the anti-rotation members (42; 142) over an associated outer hexagonal head provided at an associated screw head (36).

9. An anti-rotation device (40) for locking at least two mounting screws (34) against rotation, the at least two mounting screws (34) being configured to connect a first member (30) to a second member (20), each of the at least two mounting screws (34) having a screw head (36), the anti-rotation device (40) comprising:
at least two anti-rotation members (42; 142) each configured to engage an associated screw head (36) of the at least two mounting screws (34); and
a connecting member (44) connecting the at least two anti-rotation members (42; 142) to one another, such that the at least two anti-rotation members (42; 142) are aligned to one another, the connecting member (44) including a base portion (46) and at least two legs (48) radially extending from the base portion (46), the at least two anti-rotation members (42; 142) being configured to be mounted to an associated leg (48).

10. The anti-rotation device (40) of claim 9, wherein the anti-rotation members (42; 142) are mounted to the associated leg (48) by at least one of glueing, welding, and loosely slipping over the associated leg (48).

11. The anti-rotation device (40) of any one of claims 9 or 10, wherein at least one of the anti-rotation members (42; 142) includes a through hole (43; 143) configured to be aligned relative to the screw head (36)

12. The anti-rotation device (40) of any one of claims 9 to 11, wherein
at least one of the anti-rotation members (42; 142) includes a hexagonal shape configured to match with an inner hexagonal socket (38) of an associated screw head (36); and or
at least one of the anti-rotation members (42; 142) includes recess having a hexagonal shape configured to match with an outer hexagonal head of an associated screw head (36).

13. The anti-rotation device (40) of any one of claims 9 to 12, wherein at least one of the anti-rotation members (42; 142) includes a hexagonal end portion (144) configured to engage the associated screw head (36), and a cylindrical portion (146) configured to project from the screw head (36) along a longitudinal direction of the associated mounting screw (34).

14. The anti-rotation device (40) of any one of claims 9 to 13, wherein the connecting member (44) includes nine legs (48) symmetrically radially extending from the base portion (46), at least one of the anti-rotation members (42) being configured to be attached to an associated leg (48).
